# EUROPÄISCHE PATENTSCHRIFT

(11) **EP 0 376 354 B1**
(45) Veröffentlichungstag und Bekanntmachung des Hinweises auf die Patenterteilung: **01.06.1994**
(21) Anmeldenummer: 89124154.9
(22) Anmeldetag: 29.12.1989
(51) Int. Cl.: G11B 7/00

(54) **Verfahren zur Aufzeichnung und Wiedergabe eines analogen und digitalen Lichttones**
Method for the recording and reproduction of an analog and a digital optical soundtrack
Méthode pour l'enregistrement et la reproduction d'une bande sonore analogue et numérique

(30) Priorität: 30.12.1988 DD 324538
(43) Veröffentlichungstag der Anmeldung: 04.07.1990
(73) Patentinhaber: Institut für Medientechnik e.V., 14482 Potsdam (DE)
(72) Erfinder: Anders, Klaus-Peter, Dr.-Ing., DDR-1513 Wilhelmshorst (DD); Boden, Gerhard, Dipl.-Ing., DDR-1590 Potsdam (DD)
(74) Vertreter: Radwer, Dieter

(56) Entgegenhaltungen:
- US-A- 4 600 280
- TECHNIKA KINO I TELEVID-MOSKVA, Band 11, 1978, Seiten 3-12, Moskva, SU; B.G. BELKIN: "Entwicklung eines digitalen Tonaufzeichnungs- und Wiedergabesystems in der Kinematographie"

## Beschreibung

Die Erfindung betrifft ein Verfahren zur Aufzeichnung und Wiedergabe eines analogen und digitalen Lichttones auf einem fotografischen Aufzeichnungsträger, insbesondere einem Kinofilm und ist auf dem Gebiet der Filmtechnik und der Tonaufzeichnungs- und -wiedergabetechnik anwendbar.

In der Tonfilmtechnik erfolgt die Tonaufzeichnung zum Bild neben einer Magnettonaufzeichnung auf entsprechenden Magnettonspuren überwiegend in Form einer analogen Lichttonaufzeichnung, als sogenannte Zacken- oder Sprossenschrift, auf einer besonderen Lichttonspur. Diese fotographische Tonaufzeichnung auf dem Kinofilm geschieht mittels einer elektromagnetischen oder elektrodynamischen Anordnung, die durch analoge Änderungen von Frequenz und Amplitude des Tonsignals gesteuert wird. Die grundsätzlichen Nachteile dieser analogen Lichttonaufzeichnung sind trotz aller Maßnahmen zur Minderung von Störeinflüssen auf Amplitude und Frequenzgang hinreichend bekannt und physikalisch bedingt.

Die Anwendung einer digitalen Tonaufzeichnung und ihrer Wiedergabe würde auch für den Tonfilm eine weitgehende Qualitätsverbesserung ergeben. Frequenzgang und Dynamik des Tones ließen sich bedeutsam erweitern und die Störgeräuschdämpfung erhöhen. Praktisch erfolgt gegenwärtig erst die Nutzanwendung der digitalen Tonaufzeichnung und -wiedergabe auf Magnettonbasis. Im Prozeß der Herstellung von Tonfilmen kann die digitale Lichttonaufzeichnung vorläufig nur eine breite Anwendung für verschiedene Zwischenbearbeitungsprozesse ermöglichen. Eine endgültige Verwirklichung der Tonbegleitung von Filmen in Gestalt einer digitalen Lichttonaufzeichnung wird bei aller wünschenswerten Erhöhung der Tonqualität erst dann gegeben sein, wenn die fotografische Tonaufzeichnung auf den Massenkopien auch digital sein wird (Teoria fonogramm | Theorie der Tonaufzeichnung| V.A. Burgov - In: Iskusstvo, Moskva, 1984, S.161f.) Es ist aber bekannt, daß auch Vorschläge für eine digitale Lichttonaufzeichnung auf Kinofilm unterbreitet wurden, die grundsätzlich eine Massenkopierung auf Filmkopien ermöglichen (Razrabotka cifrovoy sistemy zapist-vosprozvedeniâ zvuka u kinematografe |Entwicklung eines digitalen Tonaufzeichnungs- und -wiedergabesystems in der Kinematographie| /B.G.Belkin - In: Tehnika Kino i televid - Moskva, 1978, Heft 11, S.3-12; DE-AS 1447120; DE-AS 2449114; US-PS 4600280). Alle diese bekannten digitalen Lichttonverfahren haben aber trotz aller Vorteile der digitalen Tontechnik den entscheidenden Nachteil der Inkompatibilität zum verbreiteten analogen Lichttonverfahren und erfordern neue zusätzliche Geräte, die dann aber die mengenmäßig vorherrschenden analogen Lichttonaufzeichnungen nicht reproduzieren können.

Um die Vorteile der analogen Lichttonaufzeichnung bezüglich der vorhandenen Gerätetechnik nutzen zu können und gleichzeitig auch digitale fotografische Tonaufzeichnung und -wiedergabe zu ermöglichen ist bekannt, neben der herkömmlichen analogen Lichttonaufzeichnung in einer genormten Lichttonspur neben der Filmperforation und den Bildfeldern eine digitale Lichttonaufzeichnung im Bildstrich zwischen den Filmbildern anzuordnen, die durch eine CCD-Matrix abtastbar ist (Optisk digitalijud för film |Optische Tonaufzeichnung für Film|/B.Broberg; B.Löhr - In: film-teve-video, Tidskriften TM - Stockholm, 73 (3/82) ). Dieses Verfahren ermöglicht zwar sowohl die Nutzung einer analogen als auch einer digitalen Lichttonaufzeichnung, beseitigt aber nicht die nachteilige Inkompatibilität der eigentlichen herkömmlichen Lichttonspur für beide Verfahren und bedeutet einen höheren Geräte- und Verfahrensaufwand für die Tonaufzeichung und -wiedergabe.

Aufgabe der Erfindung ist die Entwicklung eines Verfahrens zur Aufzeichnung und Wiedergabe eines analogen und digitalen Lichttones auf einem fotografischen Aufzeichnungsträger, insbesondere einem Kinofilm, das in einer Lichttonspur beide Lichttonaufzeichnungen enthält und kompatibel ist und auch eine Mehrkanaligkeit der Tonaufzeichnungen gewährleistet.

Erfindungsgemäß wird die Aufgabe dadurch gelöst, daß die Aufzeichnung eines Tonsignals auf eine Lichttonspur mittels durch gesteuerten Lichtaustritt aus einer Lichtquelle erfolgenden Belichtungen von einzelnen Flächenelementen eine digital codierte Abbildung eines zeitdiskreten Wertes eines analogen Tonsignals derart erfolgt, daß auf einer Teilspur der Lichttonspur ein Digitalwert des Tonsignals und auf dem verbleibenden Teil der Tonspur mittels zusätzlicher Belichtungen von Flächenelementen ein Flächenausgleich gebildet wird, so daß die Summe der belichteten Flächenelemente einer Zeile der Teile der Tonspur einem zeitdiskreten Wert des analogen Tonsignals entspricht. Die Wiedergabe des aufgezeichneten digitalen Tonsignals erfolgt durch zeilenweise Abtastung der das Digitalsignal enthaltenden Teilspur und die des analogen Tonsignals durch zeilenweise Abtastung der gesamten Lichttonspur.

Erfindungswesentlich ist, daß die Lage der digitalen Lichttonaufzeichnung auf der Tonspur mittels einer weiteren codierten Aufzeichnung, beispielsweise durch Spurkennung oder eine andere codierte Kennung, auf der Lichttonspur gekennzeichnet wird.

Von besonderem Vorzug für das kompatible Verfahren ist die Anwendung eines Digitalcodes der selbst für die Darstellung eines Tonsignals eine hohe Zahl von Belichtungswerten für Flächenelemente aufweist. Die Aufzeichnung und Wiedergabe aller Ton- und Codesignale kann durch einen zeilenweisen geführten, fein fokussierten Abtastlichtstrahl, beispielsweise einen Laserstrahl erfolgen, oder auch durch eine Glasfaserzeile, oder durch zeilenweise angeordnete Lichtemissions- oder -sensorelemente.

Die erfindungsgemäßen Vorteile lieger in der Kompatibilität des Verfahrens zwischen analoger und digitaler Lichttonaufzeichnung auf einer Tonspur, das bei Beibehaltung der herkömmlichen analogen Lichttontechnik die Nutzung der Vorzüge der digitalen Lichttonaufzeichnung gestattet.

Die Erfindung soll nachstehend an einem Ausführungsbeispiel näher erläutert werden. Die dazugehörige Zeichnung zeigt eine stilisierte Gesamtdarstellung eines kompatiblen Analog-/Digital -Lichttonaufzeichnungsverfahrens mit den Teilfiguren:

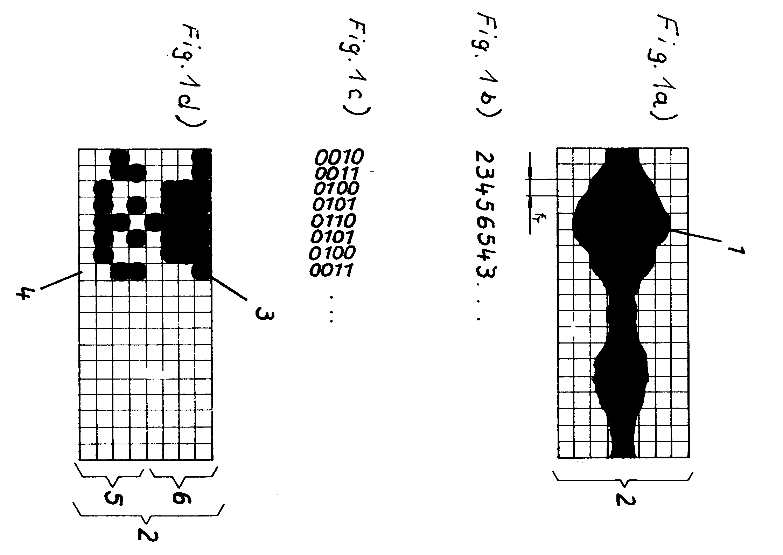

- Fig.1 a): einer herkömmlichen analogen Lichttonaufzeichnung in Form einer Doppelzacke im Zeitraster tᵣ;
- Fig.1 b): die zugehörigen Amplitudenwerte;
- Fig.1 c): die daraus gebildeten jeweiligen elektrischen Digital-Signalworte;
- Fig.1 d): die Aufzeichnung eines daraus abgeleiteten diskreten und kompatiblen Lichttonsignals.

Es ist allgemein bekannt, daß die fotografische Aufzeichnung eines analogen Begleittones zu Filmbildern gegenwärtig überwiegend als Transversalaufzeichnung in Form der sogenannten Zacken- oder Doppelzackenschrift 1 erfolgt.

Diese Tonaufzeichnung erfolgt mit Hilfe bekannter elektromagnetischer oder elektrodynamischer Anordnungen, die durch analoge Änderung von Frequenz und Amplitude eines Tonsignals gesteuert wird. Dabei können auch vor der fotografischen Tonaufzeichnung Zwischenverarbeitungsprozesse eines oder mehrerer Tonkanäle bezüglich ihrer Amplituden-Frequenzgang-Änderung, beispielsweise zur Rauschminderung oder zur Mischung mehrerer Tonsignale, beispielsweise zur Erzielung stereofoner Signale erfolgen.

Neben den physikalisch bedingten Nachteilen einer analogen Lichttonaufzeichnung auf Kinefilm wirken sich auch bezüglich des Aufwandes eine moderne digitale Bearbeitungsstrecke im Studio und Vorteile neuer digitaler Speicherverfahren negativ aus, wenn es nicht gelingt, diese neue digitale Technik auch den Anwendern unter akzeptablen, ökonomischen Bedingungen nutzbar zu machen.

Um ein aus der Filmbearbeitungsstrecke hervorgehendes, den Begleitton zum Bild ergebendes, analoges oder digitales Tonsignal auf eine Lichttonspur 2 eines Kinefilmes aufzuzeichnen gibt es bekanntlich zwei Möglichkeiten: die Analogaufzeichnung oder die Digitalaufzeichnung. Eine Möglichkeit, beide Verfahren auf einer Lichttonspur 2 zu integrieren und sie zu kombinieren ist nicht bekannt.

Das Wesen der erfindungsgemäßen Lösung besteht in einer Integration der Aufzeichnung eines zeitdiskreten Analogtones im Zeitraster tᵣ mit digitaler Ansteuerung aller zu belichtenden Flächenelemente 3 einer Zeile 4 auf der Lichttonspur 2, wobei sie sich in einen Digitalanteil 5 und einem durch Hinzufügung weiterer Belichtungen als Flächenausgleich 6 bezeichneten Teil zu einem sich summierenden diskreten Analogsignal herausbildet. Die Zeichnung zeigt die entsprechenden Abhängigkeiten zwischen den analogen und digitalen Werten vereinfacht in den Teilfiguren 1a) bis 1d). Erzielt wird dieses Ergebnis mit einer digital codierten Abbildung eines zeitdiskreten Wertes des Analogsignals zu periodischen Zeitpunkten, wobei entsprechend der Codierung ein kreisförmiges oder anders geformtes Flächenelement 3 von einer entsprechenden Belichtungseinrichtung exponiert wird. Vorrang für die Belichtung hat der Digitalanteil 5 in der Lichttonspur 2, während der Flächenausgleich 6 zum diskreten Analogsignal durch eine elektronische Logikschaltung, hard- und/oder softwaremäßig hinzugefügt wird, so daß die Gesamtfläche aller belichteten Flächenelemente 3 einer Zeile 4 dem Analogsignal 1 zwischen zwei Abtastpunkten im Zeitraster tᵣ entspricht.

Um die Anzahl der belichteten Flächenelemente 3 im Digitalanteil 5 hoch und damit die notwendigen Belichtungen der Flächenelemente 3 im Flächenausgleich 6 gering zu halten, wird ein Digitalcode verwendet, der selbst eine hohe Zahl von Belichtungenswerten aufweist, gegebenenfalls durch codierte Voranstellung von Negativ-Bits.

Das die Qualität des diskreten Lichttonsignals mindernde Quantisierungsrauschen kann bei diesem Verfahren schon durch Berücksichtigung erfolgter Quantisierungsrundungen der Belichtungen rechnerisch bei der Belichtung von Flächenelemente 3 des Flächenausgleichs 6 berücksichtigt werden.

Die Wiedergabe des Tonsignals kann als Analogsignal mit normalen Tonwiedergabeeinrichtungen eines Filmprojektors durch zeilenweise Abtastung der gesamten Tonspur 2 erfolgen. Eine alleinige Wiedergabe des Digitalanteiles 5 erfolgt über eine entsprechende Abtastung der diesen Anteil enthaltenden Teilspur. Dabei ist die Auswahl des Digitalanteiles 5 in seiner Lage in der Tonspur 2 mittels einer weiteren codierten Aufzeichnung auf der Tonspur 2 oder an anderer Stelle kennzeichenbar, beispielsweise durch Spurkennung oder einen anderen Code.

Die zeilenweise Aufzeichnung und Wiedergabe der Ton- und Codesignale kann durch einen entsprechend gesteuerten, stark fokussierten, feinen Abtastlichtstrahl, z.B. einen Laserstrahl, durch eine Glasfaserzeile oder zeilen- oder matrixartig angeordnete Lichtemissions- bzw. -sensorelemente, die für derartige Zwecke allgemein bekannt sind, erfolgen.

Das Verfahren ist für Negativ- und den Positivprozeß geeignet, auch mehrkanalige Lichttonaufzeichnungen und die Aufzeichnung zusätzlicher Informationskanäle, beispielsweise für Schalt- und Steuerfunktionen, sind möglich. Die erfindungsgemäße Lichttonaufzeichnung ist kopier- und regenerierfähig, weil dem Analogverfahren digitale Eigenschaften verliehen werden. Die Lage der Lichttonspur auf dem Kinofilm ist nicht an gegegenwärtige Norm, die Anordnung zwischen Bildfeld und Filmperforation, gebunden. Die Lichttonspur kann auch auf dem Filmrand angeordnet werden.

## Patentansprüche

1. Verfahren zur Aufzeichnung und Wiedergabe eines analogen und digitalen Lichttones auf einem fotografischen Aufzeichnungsträger, insbesondere einem Kinofilm, gekennzeichnet dadurch, daß bei der Aufzeichnung eines Tonsignals auf eine Lichttonspur (2) mittels durch gesteuerten Lichtaustritt aus einer Lichtquelle erfolgender Belichtung von einzelnen Flächenelementen (3) eine digital codierte Abbildung eines zeitdiskreten Wertes eines analogen Tonsignals (1) derart erfolgt, daß auf einer Teilspur (5) der Lichttonspur (2) ein Digitalwert des Tonsignals und auf dem verbleibenden Teil (6) der Lichttonspur (2) mittels zusätzlicher Belichtungen von Flächenelementen (3) ein Flächenausgleich (6) gebildet wird, so daß die Summe der belichteten Flächenelemente (3) einer Zeile(4) der Teile (5 ; 6) dar Lichttonspur (2) einem zeitdiskreten Wert des analogen Tonsignales (1) entspricht und daß die Wiedergabe des aufgezeichneten digitalen Tonsignals (5) durch zeilenweise Abtastung der das Digitalsignal enthaltenden Teilspur (5) und die Wiedergabe des analogen Tonsignals durch zeilenweise Abtastung der gesamten Lichttonspur (2) erfolgt.

2. Verfahren nach Anspruch 1, dadurch gekennzeichnet, daß die Lage der digitalen Tonaufzeichnung (5) auf der Lichttonspur (2) mittels einer weiteren codierten Aufzeichnung auf ihr gekennzeichnet wird, beispielsweise durch Spurkennung oder eine andere codierte Kennung.

3. Verfahren nach Anspruch 1, gekennzeichnet durch die Verwendung eines Digitalcodes, der selbst für die Darstellung eines Tonsignales eine hohe Zahl von Belichtungswerten für Flächenelemente (3) aufweist.

4. Verfahren nach Anspruch 1 bis 3, dadurch gekennzeichnet, daß die zeilenweise Aufzeichnung und Wiedergabe der Ton- und Codesignale durch einen zeilenweise geführten, stark fokussierten, feinen Abtast-Lichtstrahl, beispielsweise einen Laserstrahl, durch eine Glasfaserzeile oder zeilenweise angeordnete Lichtemissions- oder -sensorelemente erfolgt.

## Claims

1. Process for the recording and reproduction of an analog and digital optical soundtrack on a photographic record carrier, in particular a cine film, characterised in that while recording a sound signal on a soundtrack (2) by exposure of individual surface elements (3) by means of controlled light leakage from the light source, a digitally coded image of a time-discrete value of an analog sound signal (1) is produced in such a way that a digital value of said sound signal is formed on a section (5) of said soundtrack (2) and on the remaining section (6) of said soundtrack (2) a surface compensation (6) is formed by additional exposures of surface elements (2), so that the sum of the exposed surface elements (3) of one line (4) of sections (5; 6) of said soundtrack (2) corresponds to a time-discrete value of the analog sound signal (1); and that reproduction of the recorded digital sound signal (5) is achieved by scanning the section (5) of soundtrack containing the digital signal line by line and reproduction of the analog sound signal is achieved by scanning the entire soundtrack (2) line by line.

2. Process according to Claim 1, characterised in that the location of the digital sound recording (5) on the soundtrack (2) is marked thereon by means of a further coded recording, for example by track identification or other coded identification.

3. Process according to Claim 1, characterised by the use of a digital code, which is itself provided with a large number of exposure values for surface elements (3) for representation of a sound signal.

4. Process according to Claims 1 to 3, characterised in that the line-by-line recording and reproduction of the sound and code signals are achieved by a strongly focussed, fine scanning light beam directed line by line, for example a laser beam, through a glass fibre line or light emission or sensor elements arranged in lines.

## Revendications

1. Procédé pour l'enregistrement et la reproduction d'une bande sonore analogique et numérique sur un support d'enregistrement photographique, notamment sur une pellicule cinématographique, caractérisé en ce que lors de l'enregistrement d'un signal sonore sur une bande sonore optique (2) au moyen de l'exposition à la lumière s'effectuant par la sortie de lumière commandée à partir d'une source lumineuse provenant de différents éléments de surface (3), il se produit une reproduction codée numériquement d'une valeur discrète temporelle d'un signal sonore analogique (1) de sorte que sur une piste partielle (5) de la bande sonore optique (2) il est formé une valeur numérique du signal sonore et sur la partie restante (6) de la bande sonore optique (2) il est formé, au moyen d'exposition supplémentaire des éléments de surface (3), une compensation de surface (6) de sorte que la somme des éléments de surface exposés (3) d'une ligne (4) des parties (5 ; 6) de la bande sonore optique (2) correspond à une valeur discrète temporelie du signal sonore analogique (1) et en ce que la reproduction du signal sonore numérique enregistré (5) s'effectue par balayage ligne par ligne de la piste partielle (5) contenant le signal numérique et la reproduction du signal sonore analogique s'effectue par balayage ligne par ligne de la totalité de la piste sonore optique (2).

2. Procédé selon la revendication 1, caractérisé en ce que la position de l'enregistrement sonore numérique (5) sur la piste sonore optique (2) est désignée au moyen d'un autre enregistrement codé par exemple par marquage de piste ou d'un autre marquage codé.

3. Procédé selon la revendication 1, caractérisé par l'utilisation d'un code numérique, lequel lui-même pour la représentation d'un signal sonore présente un nombre élevé de valeurs d'exposition pour les éléments de surface (3).

4. Procédé selon les revendications 1 à 3, caractérisé en ce que l'enregistrement et la reproduction ligne par ligne des signaux sonores et de code s'effectuent par un rayon lumineux de balayage fin, fortement focalisé, guidé ligne par ligne, par exemple un rayon laser, par une ligne de fibres de verre ou par des éléments capteurs ou d'émission de lumière agencés ligne par ligne.
